# EUROPEAN PATENT APPLICATION

(11) **EP 4 718 689 A1**
(43) Date of publication of application: **01.04.2026**
(21) Application number: 24941304.8
(22) Date of filing: 08.08.2024
(51) Int. Cl.: H02K 7/06

(54) **LINEAR STEPPING MOTOR, BIONIC FINGER AND BIONIC DEXTEROUS HAND**

(30) Priority: 30.05.2024 CN 202410686173
(71) Applicant: Shenzhen Zhaowei Machinery & Electronics Co., Ltd., Shenzhen, Guangdong 518103 (CN)
(72) Inventor: WANG, Junheng, Shenzhen, Guangdong 518103 (CN); LI, Ping, Shenzhen, Guangdong 518103 (CN); HAO, Shiquan, Shenzhen, Guangdong 518103 (CN)
(74) Representative: Müller-Boré & Partner Patentanwälte PartG mbB
(86) International application number: PCT/CN2024/110579
(87) International publication number: WO 2025/246026

(57) **Abstract**

Provided are a linear stepper motor, a bionic finger, and a bionic dexterous hand. The linear stepper motor includes an outer housing (10) and the following components disposed within the outer housing (10). The following components includes: a stator (6) fixed to an inner wall of the outer housing (10); a drive nut (1) rotatably disposed within the outer housing (10) and disposed to pass through an inner ring of the stator (6); a rotor (7) disposed around an outer peripheral portion of the drive nut (1); and a lead screw (2) slidably disposed in the outer housing (10) in an axial direction of the outer housing (10), where an end of the lead screw (2) is configured to extend out from the outer housing (10), the drive nut (1) is threadedly connected to the lead screw (2), and the stator (6) drives the rotor (7) and the drive nut (1) to rotate together after being energized, to drive the lead screw (2) to linearly project and retract relative to the outer housing (10).

## Description

The present application claims priority to Chinese Patent Application No. 202410686173.7, filed with the China National Intellectual Property Administration (CNIPA) on May 30, 2024, the disclosure of which is incorporated herein by reference in its entirety.

### TECHNICAL FIELD

The present application relates to the technical field of manipulators, for example, a linear stepper motor, a bionic finger, and a bionic dexterous hand.

### BACKGROUND

A bionic dexterous hand is a complex device that integrates multiple bionic fingers and is designed to simulate the overall function and flexibility of the human hand. The bionic dexterous hand can perform precise object manipulation and grasping in complex operating environments through advanced control algorithms and sensing technologies.

At present, the grasping action of the bionic fingers is achieved in a manner that a single motor drives multiple knuckles to rotate through a tendon rope. This driving form requires continuous input of power to the motor to maintain the grasping posture, and has problems such as poor transmission efficiency and positioning accuracy, low space utilization, and low output power.

### SUMMARY

The present application provides a linear stepper motor. The linear stepper motor has self-locking performance and higher transmission efficiency and positioning accuracy. It is suitable for high-speed and high-precision grasping action control of bionic fingers and bionic dexterous hands. It features a compact and small structure, which is conducive to miniaturized design.

The present application provides a bionic finger and a bionic dexterous hand. The grasping action of the bionic finger is achieved by the linear stepper motor. An outer housing of the linear stepper motor and a casing of a drive knuckle are integrally formed to improve space utilization and enhance the power of the motor.

In a first aspect, the present application provides a linear stepper motor. The linear stepper motor includes an outer housing and components disposed within the outer housing. The components include a stator, a drive nut, a rotor, and a lead screw. The stator is fixed to an inner wall of the outer housing. The drive nut is rotatably disposed within the outer housing and is disposed to pass through an inner ring of the stator. The rotor is disposed around an outer peripheral portion of the drive nut. The lead screw is slidably disposed in the outer housing in an axial direction of the outer housing, where an end of the lead screw is configured to extend out from the outer housing, the drive nut is threadedly connected to the lead screw, and the stator drives the rotor and the drive nut to rotate together after being energized so as to drive the lead screw to linearly project and retract relative to the outer housing.

Optionally, the linear stepper motor further includes a radial bearing and a thrust bearing. The radial bearing is disposed at an end of the drive nut away from the end of the lead screw configured to extend out from the drive nut, where an inner ring of the radial bearing is sleeved on an outer periphery of the drive nut, and an outer ring of the radial bearing is fixed to the inner wall of the outer housing. An end of the drive nut extending close to the lead screw is provided with a thrust step, the outer housing is provided with an inner flange at an opening of the outer housing from which the lead screw is configured to extend out, a thrust shaft piece of the thrust bearing abuts against the thrust step, and a thrust seat piece of the thrust bearing is fixed to the inner flange.

Optionally, the linear stepper motor further includes a locking block, where the locking block is disposed to be clamped in the outer housing and extends into an inner cavity of the outer housing, and the locking block is pressed against an end of the outer ring of the radial bearing away from the end of the lead screw configured to extend out from the drive nut.

Optionally, the end of the drive nut away from the end of the lead screw configured to extend out from the drive nut is provided with a limit step, and a side of the inner ring of the radial bearing close to the end of the lead screw configured to extend out from the drive nut is pressed against the limit step.

Optionally, the inner diameter of the inner flange is less than the inner diameter of the thrust bearing, and the inner flange completely covers the thrust bearing, thereby fully shielding and protecting the thrust bearing.

Optionally, the radial bearing is a deep groove ball bearing.

Optionally, the thrust bearing is a thrust roller bearing or a thrust sliding bearing.

Optionally, the rotor is made of magnetic steel. The stator includes an iron core and a coil. The iron core is fixed to the inner wall of the outer housing, a side of the iron core facing the outer housing is provided with a winding groove, and the coil is wound in the winding groove.

Optionally, the drive nut is made of a high-molecular plastic material.

Optionally, the lead screw is made of a metal alloy material.

In a second aspect, the present application provides a bionic finger including an end knuckle and multiple drive knuckles which are rotationally connected in sequence, where each of the multiple drive knuckles includes the linear stepper motor described above, an end of the lead screw configured to extend out from the outer housing is drivingly connected to an adjacent drive knuckle or the end knuckle and configured to drive the adjacent drive knuckle or the end knuckle to rotate, and the outer housing of the linear stepper motor and outer shells of the multiple drive knuckles are integrally formed.

In a third aspect, the present application provides a bionic dexterous hand including the bionic finger described above and a palm structure, where the bionic finger is movably connected to the palm structure.

### BRIEF DESCRIPTION OF THE DRAWINGS

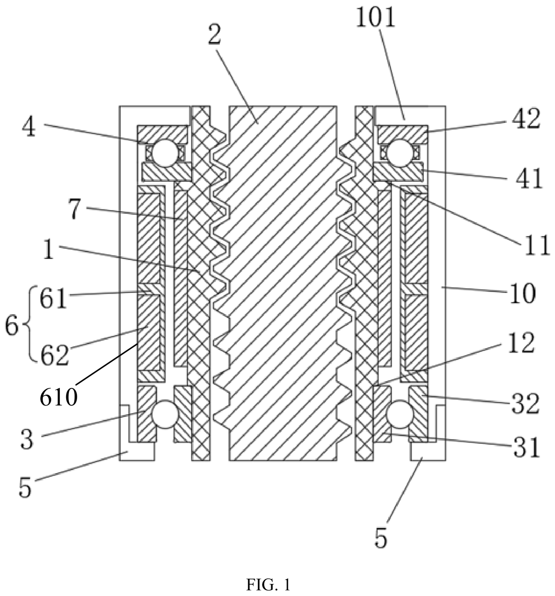

FIG. 1 is a partial structural sectional view of a linear stepper motor according to the present application.

### List of reference numbers

- 10: outer housing
- 101: inner flange
- 1: drive nut
- 11: thrust step
- 12: limit step
- 2: lead screw
- 3: radial bearing
- 31: inner ring
- 32: outer ring
- 4: thrust bearing
- 41: thrust shaft piece
- 42: thrust seat piece
- 5: locking block
- 6: stator
- 61: iron core
- 610: winding groove
- 62: coil
- 7: rotor

### DETAILED DESCRIPTION

The present application will be described in conjunction with the drawings and embodiments below. It is to be understood that the specific embodiments described herein are merely used for explaining the present application and are not intended to limit the present application. Moreover, for ease of description, only some, but not all, of the structures related to the present application are shown in the drawings.

In the description of the present application, unless otherwise expressly specified and limited, the term "connected to each other", "connected", or "fixed" is to be construed in a broad sense, for example, as securely connected, detachably connected, or integrated; mechanically connected or electrically connected; directly connected to each other, indirectly connected to each other via an intermediary, internal connection between two elements, or interaction between two elements. For those of ordinary skill in the art, specific meanings of the preceding terms in the present application may be understood based on specific situations.

In the present application, unless otherwise expressly specified and limited, a first feature being "on" or "under" a second feature may include the first feature and the second feature being in direct contact, or may include the first feature and the second feature not being in direct contact but being in contact with each other through an additional feature therebetween. Moreover, the first feature being "on", "above" or "over" the second feature includes the first feature being directly on, above or over and obliquely on, above or over the second feature, or simply indicates that the first feature is at a higher level than the second feature. The first feature being "under", "below" or "underneath" the second feature includes the first feature being directly under, below or underneath and obliquely under, below or underneath the second feature, or simply represents that the first feature is at a lower level than the second feature.

In the description of this embodiment, the orientational or positional relationships indicated by terms "above", "below", "left", "right", and the like are based on the orientational or positional relationships shown in the drawings, and are merely for ease of description and simplifying an operation, rather than indicating or implying that the referred device or element must have a specific orientation and be constructed and operated in a specific orientation. Therefore, it shall not be construed as a limitation on the present application. Moreover, the terms "first" and "second" are used only to distinguish between descriptions and have no special meaning.

This embodiment provides a bionic dexterous hand. The bionic dexterous hand includes a bionic finger and a palm structure, and the bionic finger is movably connected to the palm structure. The bionic finger includes an end knuckle and multiple drive knuckles, which are rotationally connected in sequence. The drive knuckle includes a linear stepper motor, and the linear stepper motor is drivingly connected to an adjacent drive knuckle or the end knuckle and configured to drive the adjacent drive knuckle or the end knuckle to rotate.

As shown in FIG. 1, the linear stepper motor includes an outer housing 10, a stator 6, a rotor 7, a drive nut 1, and a lead screw 2. The stator 6, the rotor 7, the drive nut 1 and the lead screw 2 are disposed within the outer housing 10. The stator 6 is fixed to an inner wall of the outer housing 10. The drive nut 1 is rotatably disposed within the outer housing 10 and is disposed to pass through an inner ring of the stator 6. The rotor 7 is disposed around an outer peripheral portion of the drive nut 1. The lead screw 2 is slidably disposed in the outer housing 10 in an axial direction of the outer housing 10, and an end (i.e., an upper end of the lead screw 2 in FIG. 1) of the lead screw 2 is configured to extend out from the outer housing 10 and is drivingly connected to the adjacent drive knuckle or the end knuckle. The drive nut 1 is threadedly connected to the lead screw 2. The stator 6 drives the rotor 7 and the drive nut 1 to rotate together after being energized so as to drive the lead screw 2 to linearly project and retract relative to the outer housing 10, thereby driving the drive knuckle or the end knuckle connected to the lead screw 2 to rotate. The outer housing 10 of the linear stepper motor and a casing of the drive knuckle are integrally formed.

According to the bionic finger and the bionic dexterous hand provided in this embodiment, the grasping action of the bionic finger is achieved by the linear stepper motor. In the first aspect, the linear stepper motor drives the rotor 7 and the drive nut 1 to rotate together by energizing the stator 6. The drive nut 1 then drives the lead screw 2, which is threadedly connected to the drive nut 1, to slide relative to the outer housing 10, thereby achieving the conversion of rotational power into linear power. The extension and retraction position can be maintained through the self-locking between the drive nut 1 and the lead screw 2 without continuous input of power. Moreover, driving the lead screw 2 to extend and retract through the drive nut 1 results in higher rigidity, which can effectively improve transmission efficiency and positioning accuracy. It is very suitable for controlling the high-speed and high-precision grasping actions of the bionic finger and the bionic dexterous hand. Furthermore, the drive nut 1 serves as a rotating shaft of the linear stepper motor, which simplifies the structure of the linear stepper motor, makes its structure more compact and small, and is conducive to miniaturized design for application in the bionic finger. In the second aspect, the outer housing 10 of the linear stepper motor and the casing of the drive knuckle are integrally formed; that is, the outer housing 10 of the linear stepper motor serves as the casing structure of the bionic finger. This makes the overall structure more compact, improves space utilization, and enables a linear stepper motor with higher output power to be mounted in the limited space. As a result, the output power is increased, thereby allowing for greater and more stable grasping force.

Exemplarily, the rotor 7 is made of magnetic steel, and the rotor 7 and the outer peripheral portion of the drive nut 1 are fixedly connected as a whole by adhesive. As shown in FIG. 1, the stator 6 includes an iron core 61 and a coil 62. The iron core 61 is tightly fitted and fixed to the inner wall of the outer housing 10, a side of the iron core 61 facing the outer housing 10 is provided with a winding groove 610, and the coil 62 is wound in the winding groove 610. The coil 62 drives the rotor 7 and the drive nut 1 to rotate together after being energized with alternating current.

Exemplarily, as shown in FIG. 1, the drive nut 1 is rotationally disposed in the outer housing 10 through a bearing. The linear stepper motor further includes a radial bearing 3 and a thrust bearing 4.

As shown in FIG. 1, the radial bearing 3 is disposed at an end of the drive nut 1 away from the end of the lead screw 2 configured to extend out from the drive nut 1. The inner ring 31 of the radial bearing 3 is tightly sleeved on the outer periphery of the drive nut 1. The outer ring 32 of the radial bearing 3 is fixed to the inner wall of the outer housing 10. The radial bearing 3 is capable of bearing the radial load of the drive nut 1.

Exemplarily, as shown in FIG. 1, the linear stepper motor also includes a locking block 5. The locking block 5 is disposed to be clamped in the outer housing 10 and extends into an inner cavity of the outer housing 10. The end of the drive nut 1 away from the end of the lead screw 2 configured to extend out from the drive nut 1 is provided with a limit step 12. The locking block 5 is pressed against a side of the outer ring 32 of the radial bearing 3 away from the end of the lead screw 2 configured to extend out from the drive nut 1, and a side of the inner ring 31 of the radial bearing 3 close to the end of the lead screw 2 configured to extend out from the drive nut 1 is pressed against the limit step 12, so that the radial bearing 3 is locked between the outer housing 10 and the drive nut 1. Moreover, when maintenance or adjustment is required, the radial bearing 3 may be removed simply by detaching the locking block 5.

In this embodiment, the radial bearing 3 is a deep groove ball bearing. In other embodiments of the present application, the radial bearing 3 may also adopt an angular contact ball bearing, a needle roller bearing, and the like.

As shown in FIG. 1, the thrust bearing 4 is disposed at an end of the drive nut 1 extending close to the lead screw 2. The end of the drive nut 1 extending close to the lead screw 2 is provided with a thrust step 11. The outer housing 10 is provided with an inner flange 101 at an opening of the outer housing 10 from which the lead screw 2 is configured to extend out. A thrust shaft piece 41 of the thrust bearing 4 abuts against the thrust step 11, and a thrust seat piece 42 of the thrust bearing 4 is fixed to the inner flange 101. The thrust bearing 4 is capable of withstanding the axial load of the drive nut 1.

Since the linear stepper motor is configured to drive the grasping action of the bionic finger, the action resistance of the bionic finger mainly exists in the retraction stage of the lead screw 2. Therefore, the lead screw 2 bears the maximum axial load when the lead screw 2 moves towards an end of the outer housing 10 close to the opening under the drive of the drive nut 1. The thrust bearing 4 disposed here can effectively bear the one-way axial force generated during the grasping process and improve the bearing capacity. The thrust bearing 4 cooperates with the radial bearing 3 to achieve both centering and load-bearing functions.

As shown in FIG. 1, the inner diameter of the inner flange 101 is less than the inner diameter of the thrust bearing 4, and the inner flange 101 completely covers the thrust bearing 4, thereby fully shielding and protecting the thrust bearing 4.

Exemplarily, the thrust bearing 4 is a thrust roller bearing or a thrust sliding bearing.

Exemplarily, the drive nut 1 may be made of polymer plastic materials such as polytetrafluoroethylene (PTFE) and polyurethane, which have excellent high-temperature resistance and wear resistance. The lead screw 2 is made of metal alloy materials such as S45C steel and SUJ2 steel, which have high strength, wear resistance, and high-temperature resistance. The material selection and matching between the drive nut 1 and the lead screw 2 can improve the transmission efficiency between the drive nut 1 and the lead screw 2, reduce structural wear, and increase the service life of the linear stepper motor.

Exemplarily, as shown in FIG. 1, the outer housing 10 is configured as a cylindrical structure. An extension and retraction direction of the lead screw 2 is the same as the axial direction of the outer housing 10, and the cylindrical structure of the outer housing 10 is adapted to the knuckle shape of the bionic finger.

## Claims

1. A linear stepper motor, comprising an outer housing (10) and following components disposed within the outer housing (10):
a stator (6), which is fixed to an inner wall of the outer housing (10);
a drive nut (1), which is rotatably disposed within the outer housing (10) and is disposed to pass through an inner ring of the stator (6);
a rotor (7), which is disposed around an outer peripheral portion of the drive nut (1); and
a lead screw (2), which is slidably disposed in the outer housing (10) in an axial direction of the outer housing (10), wherein an end of the lead screw (2) is configured to extend out from the outer housing (10), the drive nut (1) is threadedly connected to the lead screw (2), and the stator (6) drives the rotor (7) and the drive nut (1) to rotate together after being energized so as to drive the lead screw (2) to linearly project and retract relative to the outer housing (10).

2. The linear stepper motor of claim 1, further comprising:
a radial bearing (3), which is disposed at an end of the drive nut (1) away from the end of the lead screw (2) configured to extend out from the drive nut (1), wherein an inner ring (31) of the radial bearing (3) is sleeved on an outer periphery of the drive nut (1), and an outer ring (32) of the radial bearing (3) is fixed to the inner wall of the outer housing (10); and
a thrust bearing (4), wherein an end of the drive nut (1) close to the end of the lead screw (2) configured to extend out from the drive nut (1) is provided with a thrust step (11), the outer housing (10) is provided with an inner flange (101) at an opening of the outer housing (10) from which the lead screw (2) is configured to extend out, a thrust shaft piece (41) of the thrust bearing (4) abuts against the thrust step (11), and a thrust seat piece (42) of the thrust bearing (4) is fixed to the inner flange (101).

3. The linear stepper motor of claim 2, further comprising a locking block (5), wherein the locking block (5) is disposed to be clamped in the outer housing (10) and extends into an inner cavity of the outer housing (10), and the locking block (5) is pressed against an end of the outer ring (32) of the radial bearing (3) away from the end of the lead screw (2) configured to extend out from the drive nut (1).

4. The linear stepper motor of claim 3, wherein the end of the drive nut (1) away from the end of the lead screw (2) configured to extend out from the drive nut (1) is provided with a limit step (12), and a side of the inner ring (31) of the radial bearing (3) close to the end of the lead screw (2) configured to extend out from the drive nut (1) is pressed against the limit step (12).

5. The linear stepper motor of claim 2, wherein an inner diameter of the inner flange (101) is less than an inner diameter of the thrust bearing (4), and the inner flange (101) completely covers the thrust bearing (4).

6. The linear stepper motor of claim 2, wherein the radial bearing (3) is a deep groove ball bearing.

7. The linear stepper motor of claim 2 or 6, wherein the thrust bearing (4) is a thrust roller bearing or a thrust sliding bearing.

8. The linear stepper motor of any one of claims 1 to 7, wherein the rotor (7) is made of magnetic steel; and
the stator (6) comprises an iron core (61) and a coil (62), the iron core (61) is fixed to the inner wall of the outer housing (10), a side of the iron core (61) facing the outer housing (10) is provided with a winding groove (610), and the coil (62) is wound in the winding groove (610).

9. The linear stepper motor of any one of claims 1 to 7, wherein the drive nut (1) is made of a high-molecular plastic material.

10. The linear stepper motor of any one of claims 1 to 7, wherein the lead screw (2) is made of a metal alloy material.

11. A bionic finger, comprising an end knuckle and a plurality of drive knuckles which are rotationally connected in sequence, wherein each of the plurality of drive knuckles comprises the linear stepper motor of any one of claims 1 to 10, an end of the lead screw (2) configured to extend out from the outer housing (10) is drivingly connected to an adjacent drive knuckle or the end knuckle and configured to drive the adjacent drive knuckle or the end knuckle to rotate, and the outer housing (10) of the linear stepper motor and outer shells of the plurality of drive knuckles are integrally formed.

12. A bionic dexterous hand, comprising the bionic finger of claim 11 and a palm structure, wherein the bionic finger is movably connected to the palm structure.
